# EUROPEAN PATENT APPLICATION

(11) **EP 4 726 994 A1**
(43) Date of publication of application: **15.04.2026**
(21) Application number: 23940294.4
(22) Date of filing: 09.08.2023
(51) Int. Cl.: H02M 7/42, H02M 3/10, H02J 1/10

(54) **MICRO INVERTER AND POWER SUPPLY METHOD**

(30) Priority: 07.06.2023 CN 202310675450
(71) Applicant: Sungrow Power Supply Co., Ltd., Hefei, Anhui 230088 (CN)
(72) Inventor: HOU, Peng, Hefei, Anhui 230088 (CN); LIU, Weichao, Hefei, Anhui 230088 (CN); ZHANG, Runfa, Hefei, Anhui 230088 (CN); ZHU, Wanping, Hefei, Anhui 230088 (CN)
(74) Representative: Zacco Norway AS
(86) International application number: PCT/CN2023/111937
(87) International publication number: WO 2024/250414

(57) **Abstract**

The present invention provides a micro inverter and a power supply method. The micro inverter comprises a primary-side power module, a power transformer, a secondary-side power module, a first auxiliary power source and a second auxiliary power source, wherein the first auxiliary power source performs voltage reduction processing on an output voltage of a direct-current source to obtain an output voltage of the first auxiliary power source; the output voltage of the first auxiliary power source is used to supply power to a load of the primary-side power module; after receiving a voltage that is output after being processed by the primary-side power module and the power transformer, the second auxiliary power source performs voltage reduction processing on the basis of the voltage to obtain an output voltage of the second auxiliary power source; and the output voltage of the second auxiliary power source is used to supply power to a load of the secondary-side power module. In the present invention, without the need to additionally provide an isolation power source, a first auxiliary power source and a second auxiliary power source are used to perform voltage reduction processing on a voltage, such that the signal fluctuation of the voltage is reduced, and power is then supplied to loads of a primary-side power module and a secondary-side power module, thereby reducing the manufacturing cost of a micro inverter.

## Description

This application claims the priority to Chinese Patent Application No. 202310675450.X, titled "MICRO INVERTER AND METHOD FOR SUPPLYING POWER", filed on June 7, 2023, with the China National Intellectual Property Administration, which is incorporated herein by reference in its entirety.

### FIELD

The present disclosure relates to the technical field of micro inverters, and in particular to a micro inverter and a method for supplying power.

### BACKGROUND

Micro inverters can perform maximum power point tracking at a module level in a photovoltaic system and thus achieve following advantages. Different direct-current power sources do not interfere with each other when generating power, a bottleneck effect due to the series connection of the modules can be circumvented, partial occlusion or different orientation of the modules do not affect overall power output of a photovoltaic string, and operation and maintenance can also be performed at a module level. Hence, the micro inverters are drawing an increasing attention.

In related art, the micro inverters require external isolated power supplies which are configured to supply power to loads in a primary-side power module and a secondary-side power module, respectively. A large voltage directly supplied to these power modules reduces stability of the micro inverter.

### SUMMARY

In view of at least the above, a micro inverter and a method for supplying power are provided according to embodiments of the present disclosure. High manufacturing costs in the related art are addressed.

Following technical solutions according to embodiments of the present disclosure address the above issue.

In a first aspect, a micro inverter is provided according to embodiments of the present disclosure. The micro inverter comprises: a primary-side power module, a power transformer, a secondary-side power module, a first auxiliary power supply, and a second auxiliary power supply. The first auxiliary power supply is connected to a direct-current power source and the primary-side power module. The first auxiliary power supply is configured for: stepping down an output voltage of the direct-current power source to obtain an output voltage of the first auxiliary power supply; and supplying the output voltage of the first auxiliary power supply to a load in the primary-side power module. The primary-side power module is connected to the power transformer, the power transformer is connected to the second auxiliary power supply, and the second auxiliary power supply is connected to the secondary-side power module. The second auxiliary power supply is configured for: stepping down a voltage, which is outputted by the power transformer through transforming an output of the primary-side power module, to obtain an output voltage of the second auxiliary power supply; and supplying the output voltage of the second auxiliary power supply power to a load in the secondary-side power module.

In an embodiment, the first auxiliary power supply and the second auxiliary power supply are both non-isolated power supplies.

In an embodiment, the second auxiliary power supply is connected to a power grid. The second auxiliary power supply is further configured for: stepping down a voltage, which is outputted by the power grid, to obtain another output voltage of the second auxiliary power supply; and supplying the another output voltage of the second auxiliary power supply to the load in the secondary-side power module.

In an embodiment, the first auxiliary power supply comprises a voltage regulating circuit and a primary-side non-isolated step-down circuit. The voltage regulating circuit is connected to the primary-side non-isolated step-down circuit. The voltage regulating circuit is configured for: converting the output voltage of the direct-current power source into a first regulated voltage; and outputting the first regulated voltage to the primary-side non-isolated step-down circuit. The primary-side non-isolated step-down circuit is configured for: stepping down the first regulated voltage to obtain the output voltage of the first auxiliary power supply; and supplying the output voltage of the first auxiliary power supply to the load in the primary-side power module.

In an embodiment, the second auxiliary power supply comprises a voltage regulating circuit and a secondary-side non-isolated step-down circuit. The voltage regulating circuit is connected to the secondary-side non-isolated step-down circuit. The voltage regulating circuit is configured for: converting the voltage, which is outputted by the power transformer through transforming an output of the primary-side power module, into a second regulated voltage; and outputting the second regulated voltage to the secondary-side non-isolated step-down circuit. The secondary-side non-isolated step-down circuit is configured for: stepping down the second regulated voltage to obtain the output voltage of the second auxiliary power supply; and supplying the output voltage of the second auxiliary power supply to the load in the secondary-side power module.

In an embodiment, the voltage regulating circuit comprises a first capacitor, a second capacitor, a third capacitor, a first diode, and a first switch. The first capacitor and the second capacitor are connected in series. The third capacitor is connected to the first switch. A branch comprising the first capacitor and the second capacitor is connected in parallel with the third capacitor. A terminal of the first diode is connected to a common node between the first capacitor and the second capacitor, and another terminal of the first diode is connected to a common node between the third capacitor and the first switch.

In an embodiment, the voltage regulating circuit further comprises a voltage balancing circuit. The voltage balancing circuit is connected to the first capacitor and the second capacitor. The voltage balancing circuit is configured for balancing a voltage across the first capacitor and a voltage across the second capacitor.

In an embodiment, the voltage balancing circuit comprises a first resistor, a second resistor, a third resistor, a fourth resistor, a first switching transistor, a second switching transistor, and a comparator. The first resistor is connected in series with the second resistor, and a common node between the first resistor and the second resistor is connected to a non-inverting input terminal of the comparator. A branch comprising of the first resistor and the second resistor is connected in parallel with the third resistor. The third resistor is connected in parallel with a branch comprising the first switching transistor and the second switching transistor. A terminal of the third resistor is connected to a gate of the first switching transistor, a gate of the second switching transistor, and an output terminal of the comparator. The branch comprising the first switching transistor and the second switching transistor is connected in parallel with a branch comprising the first capacitor and the second capacitor. A terminal of the fourth resistor is connected to a common node between the first switching transistor and the second switching transistor, and another terminal of the fourth resistor and an inverting input terminal of the comparator are connected to a common node between the first capacitor and the second capacitor.

In an embodiment, the voltage regulating circuit comprises a second switch, a third switch, a fourth capacitor, a fifth capacitor, a second diode, and a third diode. The second switch is connected in series with the third switch. The second diode is connected in series with the third diode. The fifth capacitor is connected in parallel with a branch comprising the second diode and the third diode. The third switch is connected to a terminal of the branch comprising the second diode and the third diode. A terminal of the fourth capacitor is connected to a common node between the second switch and the third switch, and another terminal of the fourth capacitor is connected to a common node between the second diode and the third diode.

In an embodiment, the voltage regulating circuit comprises a fourth switch, a fifth switch, a sixth capacitor, a seventh capacitor, an eighth capacitor, a fourth diode, a fifth diode, a sixth diode, a seventh diode, and an eighth diode. The fourth switch is connected in series with the fifth switch. The sixth capacitor is connected in series with the fourth diode. The fifth diode is connected in series with the seventh capacitor. The seventh diode is connected in series with the eighth diode. A branch comprising the sixth capacitor and the fourth diode is connected in parallel with a branch comprising the seventh diode and the eighth diode. The branch comprising the seventh diode and the eighth diode is connected in parallel with the eighth capacitor. The sixth capacitor and the fifth diode are connected to a common node between the fourth switch and the fifth switch. The seventh capacitor is connected to a common node between the seventh diode and the eighth diode. A terminal of a branch comprising the fourth switch and the fifth switch is connected to the seventh diode. A terminal of the sixth diode is connected to a common node between the sixth capacitor and the fourth diode, and another terminal of the sixth diode is connected to a common node between the fifth diode and the seventh capacitor.

In a second aspect, a method for supplying power is provided according to embodiments of the present disclosure. The method is applicable to the micro inverter in the first aspect. The micro inverter comprises: a primary-side power module, a power transformer, a secondary-side power module, a first auxiliary power supply, and a second auxiliary power supply. The method comprises: stepping down, by the first auxiliary power supply, an output voltage of a direct-current power source to obtain an output voltage of the first auxiliary power supply; supplying the output voltage of the first auxiliary power supply to a load in the primary-side power module; stepping down, by the second auxiliary power, the voltage, which is outputted by the power transformer through transforming an output of the primary-side power module, to obtain an output voltage of the second auxiliary power supply; and supplying the output voltage of the second auxiliary power supply power to a load in the secondary-side power module.

In an embodiment, the first auxiliary power supply comprises a voltage regulating circuit and a primary-side non-isolated step-down circuit. Stepping down, by the first auxiliary power supply, the output voltage of the direct-current power source to obtain the output voltage of the first auxiliary power supply comprises: converting, by the voltage regulating circuit, the output voltage of the direct-current power source into a first regulated voltage; outputting, by the voltage regulating circuit, the first regulated voltage to the primary-side non-isolated step-down circuit; stepping down, by the primary-side non-isolated step-down circuit, the first regulated voltage to obtain the output voltage of the first auxiliary power supply; and supplying the output voltage of the first auxiliary power supply to the load in the primary-side power module.

In an embodiment, the second auxiliary power supply comprises a voltage regulating circuit and a secondary-side non-isolated step-down circuit. Stepping down, by the second auxiliary power, the voltage, which is outputted by the power transformer through transforming the output of the primary-side power module, to obtain the output voltage of the second auxiliary power supply comprises: converting, by the voltage regulating circuit, the voltage outputted by the power transformer into a second regulated voltage; outputting, by the voltage regulating circuit, the second regulated voltage to the secondary-side non-isolated step-down circuit; stepping down, by the secondary-side non-isolated step-down circuit, the second regulated voltage to obtain the output voltage of the second auxiliary power supply; and supplies the output voltage of the second auxiliary power supply to the load in the secondary-side power module.

In an embodiment, the voltage regulating circuit comprises a first capacitor, a second capacitor, a third capacitor, a first diode, and a first switch. Converting the output voltage of the direct-current power source into the first regulated voltage and outputting the first regulated voltage to the primary-side non-isolated step-down circuit comprises: in response to the output voltage of the direct-current power source being greater than a first threshold and less than a second threshold, turning on the first switch to bias the first diode reversely and charge the third capacitor with the output voltage of the direct-current power source, where the first regulated voltage is outputted from the third capacitor to the primary-side non-isolated step-down circuit; and in response to the output voltage of the direct-current power source being greater than the second threshold and less than a third threshold, turning off the first switch to bias the first diode forwardly and charge the second capacitor using the output voltage of the direct-current power source, where a voltage across the third capacitor depends on a voltage across the second capacitor, and the first regulated voltage is outputted from the third capacitor to the primary-side non-isolated step-down circuit.

In an embodiment, the voltage regulating circuit comprises a first capacitor, a second capacitor, a third capacitor, a first diode, and a first switch. Converting the voltage outputted by the power transformer into the second regulated voltage and outputting the second regulated voltage to the secondary-side non-isolated step-down circuit comprises: in response to the voltage outputted by the power transformer being greater than a first threshold and less than a second threshold, turning on the first switch to bias the first diode reversely and charge the third capacitor with the voltage outputted by the power transformer, where the second regulated voltage is outputted from the third capacitor to the primary-side non-isolated step-down circuit; and in response to the voltage outputted by the power transformer being greater than the second threshold and less than a third threshold, turning off the first switch to bias the first diode forwardly and charge the second capacitor using the voltage outputted by the power transformer, where a voltage across the third capacitor depends on a voltage across the second capacitor, and the second regulated voltage is outputted from the third capacitor to the primary-side non-isolated step-down circuit.

In an embodiment, the voltage regulating circuit further comprises a voltage balancing circuit, and the voltage balancing circuit comprises a first resistor, a second resistor, a third resistor, a fourth resistor, a first switching transistor, a second switching transistor, and a comparator. The method further comprises: in response to a voltage at a non-inverting terminal of the comparator being greater than a voltage at an inverting terminal of the comparator, turning on the first switching transistor and turning off the second switching transistor, through a high level outputted by the comparator, to charge the second capacitor via the first switching transistor and the fourth resistor and discharge the first capacitor; in response to the voltage at the non-inverting terminal being less than the voltage at the inverting terminal, turning off the first switching transistor and turning on the second switching transistor, through a low level outputted by the comparator, to charge the first capacitor via the second switching transistor and the fourth resistor and discharge the second capacitor; and in response to the voltage at the non-inverting terminal being equal to the voltage at the inverting terminal, neither discharging or charging at least one of the first capacitor or the second capacitor.

In an embodiment, the voltage regulating circuit comprises a second switch, a third switch, a fourth capacitor, a fifth capacitor, a second diode, and a third diode. Converting the output voltage of the direct-current power source into the first regulated voltage and outputting the first regulated voltage to the primary-side non-isolated step-down circuit comprises: in response to the second switch being on and the third switch being off, charging the fourth capacitor and the fifth capacitor using the output voltage of the direct-current power source; and in response to the second switch being off and the third switch being on, discharging the fourth capacitor and the fifth capacitor, where a voltage across the fourth capacitor and the fifth capacitor serves as the first regulated voltage outputted to the primary-side non-isolated step-down circuit.

In an embodiment, the voltage regulating circuit comprises a second switch, a third switch, a fourth capacitor, a fifth capacitor, a second diode, and a third diode. Converting the voltage outputted by the power transformer into the second regulated voltage and outputting the second regulated voltage to the secondary-side non-isolated step-down circuit comprises: in response to the second switch being on and the third switch being off, charging the fourth capacitor and the fifth capacitor using the output voltage of the direct-current power source; and in response to the second switch being off and the third switch being on, discharging the fourth capacitor and the fifth capacitor, where a voltage across the fourth capacitor and the fifth capacitor serves as the second regulated voltage outputted to the secondary-side non-isolated step-down circuit.

In an embodiment, the voltage regulating circuit comprises a fourth switch, a fifth switch, a sixth capacitor, a seventh capacitor, an eighth capacitor, a fourth diode, a fifth diode, a sixth diode, a seventh diode, and an eighth diode. Converting the output voltage of the direct-current power source into the first regulated voltage and outputting the first regulated voltage to the primary-side non-isolated step-down circuit comprises: in response to the fourth switch being on and the fifth switch being off, charging the sixth capacitor, the seventh capacitor and the eighth capacitor using the output voltage of the direct-current power source, where a voltage is applied on the sixth capacitor and the seventh capacitor; and in response to the fourth switch being off and the fifth switch being on, outputting a voltage across the sixth capacitor, the seventh capacitor and the eighth capacitor, which have been charged, to the primary-side non-isolated step-down circuit as the first regulated voltage.

In an embodiment, the voltage regulating circuit comprises a fourth switch, a fifth switch, a sixth capacitor, a seventh capacitor, an eighth capacitor, a fourth diode, a fifth diode, a sixth diode, a seventh diode, and an eighth diode. Converting the voltage outputted by the power transformer into the second regulated voltage and outputting the second regulated voltage to the secondary-side non-isolated step-down circuit comprises: in response to the fourth switch being on and the fifth switch being off, charging the sixth capacitor, the seventh capacitor and the eighth capacitor using the output voltage of the direct-current power source, where a voltage is applied on the sixth capacitor and the seventh capacitor; and in response to the fourth switch being off and the fifth switch being on, outputting a voltage across the sixth capacitor, the seventh capacitor and the eighth capacitor, which have been charged, to the secondary-side non-isolated step-down circuit as the second regulated voltage.

Herein the micro inverter and the method for supplying power are provided. The micro inverter comprises: the primary-side power module, the power transformer, the secondary-side power module, the first auxiliary power supply, and the second auxiliary power supply. The first auxiliary power supply is connected to a direct-current power source and the primary-side power module. The first auxiliary power supply steps down the output voltage of the direct-current power source to obtain the output voltage of the first auxiliary power supply. The output voltage of the first auxiliary power supply is supplied to the load in the primary-side power module. The primary-side power module is connected to the power transformer. The power transformer is connected to the second auxiliary power supply. The second auxiliary power supply steps down the second voltage, which is outputted by the power transformer through transforming the output of the primary-side power module, to obtain the output voltage of the second auxiliary power supply. The output voltage of the second auxiliary power supply power is supplied to the load in the secondary-side power module. There is no additional isolated power supply. The first auxiliary power supply and the second auxiliary power supply are configured for stepping down their received voltages, thereby suppressing signal fluctuation in the output voltage of the direct-current power source and the second voltage. The stepped-down voltages are then supplied to the loads in the primary-side power module and the secondary-side power module. Hence, manufacturing costs of the micro inverter are reduced.

### BRIEF DESCRIPTION OF THE DRAWINGS

Hereinafter drawings to be applied in embodiments of the present disclosure or in conventional technology are briefly described to clarify illustration of technical solutions according to embodiments of the present disclosure or in conventional technology. Apparently, the drawings in the following descriptions are only some embodiments of the present disclosure, and other drawings may be obtained by those skilled in the art based on the provided drawings without exerting creative efforts.
FIG. 1 is a schematic structural diagram of a micro inverter according to an embodiment of the present disclosure.
FIG. 2 is a schematic structural diagram of a micro inverter according to another embodiment of the present disclosure.
FIG. 3 is a structural diagram of a voltage regulating circuit according to an embodiment of the present disclosure.
FIG. 4 is a structural diagram of a voltage regulating circuit according to another embodiment of the present disclosure.
FIG. 5 is a structural diagram of a voltage regulating circuit according to another embodiment of the present disclosure.
FIG. 6 is a structural diagram of a voltage regulating circuit according to another embodiment of the present disclosure.
FIG. 7 is a flowchart of a method for supplying power according to an embodiment of the present disclosure.
FIG. 8 is a flowchart of a method for supplying power according to another embodiment of the present disclosure.
FIG. 9 is a flowchart of controlling a first switch according to an embodiment of the present disclosure.

### DETAILED DESCRIPTION

Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

The terms such as "first", "second", "third", "fourth", and the like (if any) in the specification, claims, and drawings of the present disclosure are intended for distinguishing similar objects and may not indicate a specific order or sequence. These terms may be exchanged where appropriate to implement embodiments of the present disclosure according to an order than those as shown or described herein. Moreover, the terms "include (comprise)", "have", "provided with" and any other variants thereof are intended to cover a nonexclusive inclusion. For example, a process, method, system, product, or device that includes a list of steps or units is not necessarily limited to the expressly listed steps or units, but may include other steps or units not expressly listed or inherent to the process, method, product, or device.

The terms "first", "second", or the like are only intended for description, and should not be construed as indicating or implying relative importance or implying the number of the indicated technical features. A feature modified by "first" and "second" may indicate explicitly or implicitly that there at least one such feature. In addition, the technical solutions in the various embodiments may be combined with each other when the combination can be realized by those of ordinary skills in the art. A branch comprising technical solutions is regarded as not existing and not included in the present disclosure when the technical solutions are contradictory or the combination cannot be realized.

The terms "include", "comprise", or any other variants thereof are intended to be nonexclusive. Therefore, a process, method, article or device including a series of elements include not only these elements but also other elements that are not clearly enumerated, or further include elements inherent in the process, method, article or device. Unless expressively limited otherwise, a process, method, article or device limited by "comprising/including a(n)..." does not exclude existence of another identical element in such process, method, article or device.

As described in the background, the micro inverters in related art require external isolated power supplies which are configured to supply power to loads in a primary-side power module and a secondary-side power module, respectively, and a large voltage directly supplied to these power modules reduces stability of the micro inverter. Moreover, the above powersupply schemes require an additional small power supply which has a flyback switch and can store power. Since micro inverters are compact in size, the external power supply and the small power supply with the flyback switch would require extra space, which increases manufacturing costs.

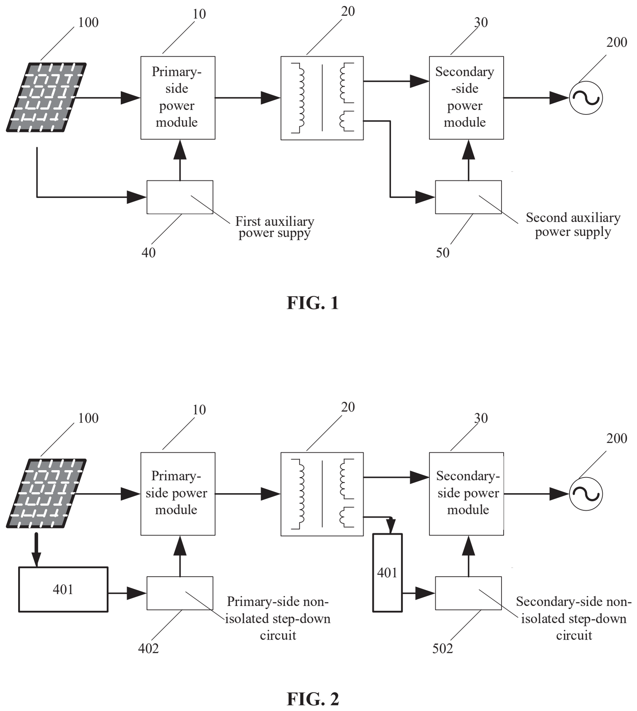

Reference is made to FIG. 1, which is a schematic structural diagram of a micro inverter according to an embodiment of the present disclosure. The micro inverter comprises a primary-side power module 10, a power transformer 20, a secondary-side power module 30, a first auxiliary power supply 40, and a second auxiliary power supply 50.

The direct-current power source 100 may be a photovoltaic module, a battery, an energy storage system, or the like.

The direct-current power source 100 is connected to the primary-side power module 10, the primary-side power module 10 is connected to the power transformer 20, the power transformer 20 is connected to the secondary-side power module 30, and the secondary-side power module 30 is connected to the power grid 200.

The first auxiliary power supply 40 is connected to the direct-current power source 100 and the primary-side power module 10. The first auxiliary power supply 40 is configured for: stepping down an output voltage VIN of the direct-current power source 100 to obtain an output voltage of the first auxiliary power supply; and supplying the output voltage of the first auxiliary power supply to a load in the primary-side power module 10.

In an embodiment, the direct-current power source 100 converts the received solar energy into electric energy, i.e., direct-current power, and the output voltage VIN of the direct-current power is output to the first auxiliary power supply 40. The first auxiliary power supply 40 steps down the output voltage VIN of the direct-current power source directly to obtain the output voltage of the first auxiliary power supply. Thereby, the output voltage of the first auxiliary power supply is supplied to the load in the primary-side power module 10.

The output voltage of the first auxiliary power supply may be, for example, 3.3V, 5V, 12V, or the like.

In an embodiment, the first auxiliary power supply may supply its output voltage to not only the load in the primary-side power module 10 but also primary-side loads such as a processor and an analog sampling chip.

The primary-side power module 10 is connected to the power transformer 20, the power transformer 20 is connected to the second auxiliary power supply 50. When receiving a second voltage that is outputted by the power transformer 20 through transforming an output of the primary-side power module 10, the second auxiliary power supply 50 steps down the second voltage to obtain an output voltage of the second auxiliary power supply. The output voltage of the second auxiliary power supply is supplied to a load in the secondary-side power module 30.

In an embodiment, the primary-side power module 10 receives the voltage output by the direct-current power source 100 and converts a direct current into alternating current. The alternating current is transformed by the power transformer 20, and an auxiliary winding of the power transformer 20 outputs the alternating-current second voltage to the second auxiliary power supply 50. The second auxiliary power supply 50 steps down the second voltage directly to obtain the output voltage of the second auxiliary power supply. Thereby, the output voltage of the second auxiliary power supply is supplied to the load in the secondary-side power module 30.

The output voltage of the first auxiliary power supply and the output voltage of the second auxiliary power supply each may be converted into a direct-current voltage or an alternating-current voltage on requirement to power the corresponding load.

In an embodiment, the first auxiliary power supply 40 and the second auxiliary power supply 50 are both non-isolated power supplies.

In an embodiment, the voltage supplied to the second auxiliary power supply 50 may be output from the power grid. In this case, there may further be following configurations.

The second auxiliary power supply 50 is connected to a power grid 200. When receiving a voltage output by the power grid 200, the second auxiliary power supply 50 steps down the voltage to obtain the output voltage of the second auxiliary power supply. The second auxiliary power supply is supplied to the load in the secondary-side power module 30.

In an embodiment, the second auxiliary power supply supplies the output voltage of the first auxiliary power supply to not only the load in the secondary-side power module 30 but also to loads such as an analog sampling chip.

In an embodiment, the second auxiliary power supply 50 further comprises a rectifying circuit configured for converting the alternating current output from the auxiliary winding of the power transformer 20 into a direct current. The above stepping-down process is performed on a voltage corresponding to the direct current.

The secondary-side power module 30 converts the alternating-current power of the main winding of the power transformer 20 into alternating-current power having the same frequency as the power grid, such that the converted alternating-current power can be coupled into the power grid 200.

Thereby, additionally isolated power supply is not necessary. The first auxiliary power supply and the second auxiliary power supply are configured for stepping their received voltages, thereby reducing the fluctuations of the voltages. The stepped-down voltage is then supplied to the loads in the primary-side power module and the secondary-side power module. Thereby, stability of the micro inverter is improved, costs and complexity of supplying power to the micro inverter are reduced, and the manufacturing costs of the micro inverter are also reduced. Meanwhile, the reduced power supply complexity significantly reduces the space occupied by the power supply.

On a basis of the micro inverter as shown in FIG. 1, reference is made to FIG. 2, which shows a schematic structural diagram of a micro inverter according to another embodiment of the present disclosure. FIG. 2 shows a more detailed structure of the first auxiliary power supply 40 and the second auxiliary power supply 50. The first auxiliary power supply 40 comprises a voltage regulating circuit 401 and a primary-side non-isolated step-down circuit 402.

The voltage regulating circuit 401 is connected to the primary-side non-isolated step-down circuit 402.

In an embodiment, the voltage regulating circuit 401 is connected between the direct-current power source 100 and the primary-side non-isolated step-down circuit 402. The primary-side non-isolated step-down circuit 402 is connected to the primary-side power module 10.

The voltage regulating circuit 401 is configured for converting an output voltage of the direct-current power source 100 into a first regulated voltage and outputting the first regulated voltage to the primary-side non-isolated step-down circuit 402.

The primary-side non-isolated step-down circuit 402 is configured for stepping down the first regulated voltage to obtain the output voltage of the first auxiliary power supply. The output voltage of the first auxiliary power supply is supplied to the load in the primary-side power module 10.

Reference is further made to FIG. 2. The second auxiliary power supply 50 comprises a voltage regulating circuit 401 and a secondary-side non-isolated step-down circuit 502. The voltage regulating circuit 401 is connected to the secondary-side non-isolated step-down circuit 502.

In an embodiment, the voltage regulating circuit 401 is connected to the power transformer 20, and the secondary-side non-isolated step-down circuit 502 is connected to the secondary-side power module 30.

The voltage regulating circuit is configured for regulating a voltage, which is outputted by the power transformer 20 through transforming an output of the primary-side power module 10, to obtain a second regulated voltage, and outputting the second regulated voltage to the secondary-side non-isolated step-down circuit 502.

The secondary-side non-isolated step-down circuit 502 is configured for stepping down the second regulated voltage to obtain the output voltage of the second auxiliary power supply. The output voltage of the second auxiliary power supply is supplied to the load in the secondary-side power module 30.

In an embodiment, a rectifying circuit comprised in the second auxiliary power supply 50 is connected between the voltage regulating circuit 401 and the power transformer 20. The rectifying circuit is configured for converting alternating-current power, which is inputted into the power transformer 20, into direct-current power. The rectifying circuit is further configured for transmitting a voltage of the direct-current power to the voltage regulating circuit 401.

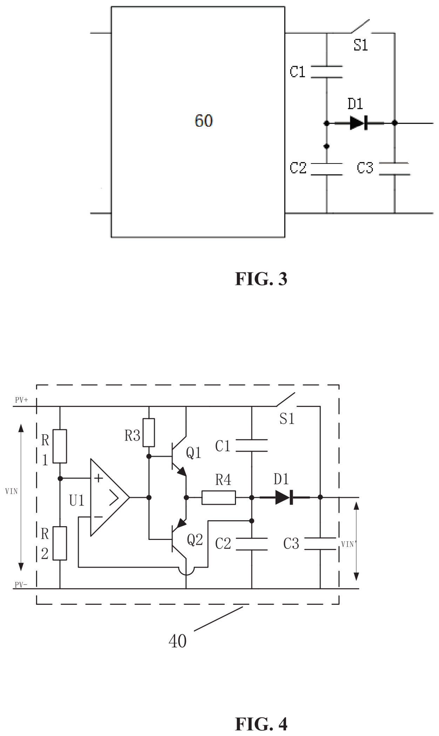

On a basis of the micro inverters in the foregoing embodiments, reference is made to FIG. 3, which is a structural diagram of a voltage regulating circuit 401 according to an embodiment of the present disclosure.

The voltage regulating circuit 401 comprises a first capacitor C1, a second capacitor C2, a third capacitor C3, a first diode D1, and a first switch S1.

The first capacitor C1 is connected in series with the second capacitor C2. The third capacitor C3 is connected to the first switch S1. A branch comprising the first capacitor C1 and the second capacitor C2 is connected in parallel with the third capacitor C3. A terminal of the first diode D1 is connected to a common node between the first capacitor C1 and the second capacitor C2, and another terminal of the first diode D1 is connected to a common node between the third capacitor C3 and the first switch S1.

In an embodiment, a first input terminal PV+ and a second input terminal PV- are connected to the output terminals of the direct-current power source 100. The first input terminal PV+ is further connected to a terminal of the branch comprising the first capacitor C1 and the second capacitor C2 that are connected in series and connected to a terminal of the first switch S1. Another terminal of the branch comprising the first capacitor C1 and the second capacitor C2 is connected to the second input terminal PV-. The common node between the first capacitor C1 and the second capacitor C2 is connected to an anode of the first diode D1. A cathode of the first diode D1 is connected to another terminal of the first switch, a terminal of the third capacitor C3, and a first output terminal. Another terminal of the third capacitor C3 is connected to the second input terminal PV- and a second output terminal. The first output terminal and the second output terminal are connected to the input terminal(s) of the primary-side non-isolated step-down circuit 402.

The first input terminal PV+ and the second input terminal PV- are both called the input terminal(s) of the voltage regulating circuit 401, and the first output terminal and the second output terminal are both called the output terminal(s) of the voltage regulating circuit 401.

In an embodiment, when the output voltage VIN of the direct-current power source that is inputted to the first auxiliary power supply varies significantly, the power across the third capacitor C3 may be adjusted through controlling the on/off state of the first switch S1.

The voltage regulating circuit 401 converts the output voltage VIN of the direct-current power source 100 into the first regulated voltage and outputs the first regulated voltage to the primary-side non-isolated step-down circuit 402, which may comprise following processes.

When the output voltage VIN of the direct-current power source is determined to be greater than a first threshold VINmin and less than a second threshold VINmid, the first switch S1 is turned on. Hence, the first diode D1 is biased reversely, and the third capacitor is charged by the output voltage VIN of the direct-current power source. As a result, the first regulated voltage is outputted from the third capacitor to the primary-side non-isolated step-down circuit 402.

When the output voltage VIN of the direct-current power source is determined to be greater than the second threshold VINmid and less than a third threshold VINmax, the first switch is turned off. Hence, the first diode D1 is forwardly biased, and the first capacitor C1 and the second capacitor C2 are charged by the output voltage VIN of the direct-current power source. As a result, a voltage across the third capacitor C3 depends on a voltage across the second capacitor C2, and the first regulated voltage is the voltage across the third capacitor C3 and is outputted to the primary-side non-isolated step-down circuit 402.

In practice, the output voltage VIN of the direct-current power source is applied between the first input terminal PV+ and the second input terminal PV- to charge the first capacitor C1 and the second capacitor C2. It is determined whether the output voltage VIN of the direct-current power source is greater than the first threshold VINmin and less than the second threshold VINmid. In case of positive determination, the first switch S1 is turned on, and the first diode D1 is inversely biased. In this case, the third capacitor C3 is connected in parallel with the first capacitor C1 and the second capacitor C2 that are connected in series and thus is charged by the voltage across the first capacitor C1 and voltage of the second capacitor C2. In other words, the first regulated voltage VIN' across the third capacitor C3 is equal to the output voltage VIN of the direct-current power source, and the third capacitor C3 outputs the first regulated voltage VIN' to the primary-side non-isolated step-down circuit 402.

When the output voltage VIN of the direct-current power source is not in the range from the first threshold VINmin to the second threshold VINmid, it is further determined whether the output voltage VIN of the direct-current power source is greater than the second threshold VINmid and less than the third threshold VINmax. In case of positive determination, the first switch S1 is turned off, and the first diode D1 is forwardly biased. In this case, the third capacitor C3 is connected in parallel with the second capacitor C2 and is charged by the voltage across the second capacitor C2. The first regulated voltage VIN' across the third capacitor C3 may thus be equal to a half of the output voltage VIN of the direct-current power source, and the third capacitor C3 outputs the first regulated voltage VIN' to the primary-side non-isolated step-down circuit 402 though discharging.

When the output voltage VIN of the direct-current power source is also not in the range from the second threshold VINmid to the third threshold VINmax, it is further determined whether the output voltage VIN is greater than the third threshold VINmax. In case of positive determination, it indicates that the output voltage VIN of the direct-current power source is subject to abnormal fluctuations. In this case, the direct-current power source 100 is controlled to stop supplying power, and an alarm message is issued, such that maintenance personnel may check. In case of negative determination, there may be voltage imbalance across the first capacitor C1 and the second capacitor C2. In this case, the voltage across the first capacitor C1 and the second capacitor C2 is adjusted to recover the voltage balance. That is, magnitude of the output voltage VIN of the direct-current power source is adjusted.

The output voltage VIN of the direct-current power source is desired to range from the first threshold VINmin to the third threshold VINmax. VINmin is smaller than VIN', and otherwise the primary-side non-isolated step-down circuit 402 would not operate. The second threshold VINmid is a threshold voltage for turning off the switch S1. The first threshold VINmin is less than the second threshold VINmid, the second threshold VINmid is less than the third threshold VINmax, and the second threshold VINmid is greater than or equal to twice of the first threshold VINmin.

In an embodiment, the voltage outputted by the power transformer 20 is converted into the second regulated voltage, and the second regulated voltage is outputted to the secondary-side non-isolated step-down circuit 502, which comprises following processes.

When the voltage outputted by the power transformer 20 is determined to be greater than a first threshold VINmin and less than a second threshold VINmid, the first switch S1 is turned on. Hence, the first diode D1 is biased reversely, and the third capacitor is charged by the output voltage VIN of the direct-current power source. As a result, the second regulated voltage is outputted from the third capacitor to the secondary-side non-isolated step-down circuit 502.

When the voltage outputted by the power transformer 20 is determined to be greater than the second threshold VINmid and less than a third threshold VINmax, the first switch is turned off. Hence, the first diode D1 is forwardly biased, and the first capacitor C1 and the second capacitor C2 are charged by the voltage outputted by the power transformer 20. As a result, a voltage across the third capacitor C3 depends on a voltage across the second capacitor C2, and the second regulated voltage is the voltage across the third capacitor C3 and is outputted to the secondary-side non-isolated step-down circuit 502.

As for the first voltage regulating circuit 401, a stepping-down process on the voltage outputted by the power transformer 20 and outputted by the power transformer 20 is the same as the aforementioned stepping-down process applied to the output voltage of the direct-current power source. The two processes may refer to each other, which is not limited herein.

Reference is further made to FIG. 3. When the output voltage of the direct-current power source is applied to the voltage regulating circuit 401, there may be voltage imbalance between the first capacitor C1 and the second capacitor C2. The voltage regulating circuit 401 may further comprises a voltage balancing circuit 60.

The voltage balancing circuit 60 is connected to the first capacitor C1 and the second capacitor C2. The voltage balancing circuit 60 is configured for balancing a voltage across the first capacitor and a voltage across the second capacitor.

In an embodiment, a side of the voltage balancing circuit 60 is connected to the first input terminal PV+ and the second input terminal PV-, and another side of the voltage balancing circuit 60 is connected to the first capacitor C1 and the second capacitor C2. The voltage balancing circuit 60 is configured for balancing the voltage across the first capacitor C1 and the voltage across the second capacitor C2.

Reference is made to FIG. 4, which shows a structure of the voltage balancing circuit 60 according to an embodiment of the present disclosure.

The voltage balancing circuit 60 comprises a first resistor R1, a second resistor R2, a third resistor R3, a fourth resistor R4, a first switching transistor Q1, a second switching transistor Q2, and a comparator U1.

The first resistor R1 is connected in series with the second resistor R2, and a common node between the first resistor R1 and the second resistor R2 is connected to a non-inverting input terminal of the comparator U1. A branch comprising the first resistor R1 and the second resistor R2 is connected in parallel with the third resistor R3, and the third resistor R3 is connected in parallel with a branch comprising the first switching transistor Q1 and the second switching transistor Q2. A terminal of the third resistor R3 is connected to a gate of the first switching transistor Q1, a gate of the second switching transistor Q2, and an output terminal of the comparator U1.

The branch comprising the first switching transistor Q1 and the second switching transistor Q2 is connected in parallel with a branch comprising the first capacitor C1 and the second capacitor C2. A terminal of the fourth resistor R4 is connected to a common node between the first switching transistor Q1 and the second switching transistor Q2, and another terminal of the fourth resistor R4 and an inverting input terminal of the comparator U1 are both connected to a common node between the first capacitor C1 and the second capacitor C2.

In an embodiment, the first input terminal PV⁺ is connected to a terminal of the branch comprising the first resistor R1 and the second resistor R2 that are connected in series, a terminal of the third resistor R3, a collector of the first switching transistor Q1, a terminal of the branch comprising the first capacitor C1 and the second capacitor C2 that are connected in series, and a terminal of the first switch S1. The second input terminal PV⁻ is connected to another terminal of the branch comprising the first resistor R1 and the second resistor R2, a collector of the second switching transistor Q2, another terminal of the branch comprising the first capacitor C1 and the second capacitor C2 that are connected in series, and a terminal of the third capacitor C3.

The common node between the first resistor R1 and the second resistor R2 is connected to the non-inverting input terminal of the comparator U1. Another terminal of the third resistor R3 is connected to the gate of the first switching transistor Q1 and the gate of the second switching transistor Q2. The gate of the first switching transistor Q1 and the gate of the second switching transistor Q2 are connected to the output terminal of the comparator U1.

An emitter of the first switching transistor Q1 is connected to an emitter of the second switching transistor Q2. The emitter of the first switching transistor Q1 and the emitter of the second switching transistor Q2 are connected to a terminal of the fourth resistor R4. Another terminal of the fourth resistor R4 is connected to a common node between the first capacitor C1 and the second capacitor C2 and is connected to the anode of the first diode D1. The inverting input terminal of the comparator U1 is connected to a common node between the first capacitor C1 and the second capacitor C2 that are connected in series.

When the voltage at the non-inverting input terminal of the comparator U1 is greater than the voltage at the inverting input terminal, the comparator outputs a high level. The high level pulls up the third resistor R3, so that a voltage at third resistor R3 is equal to the input voltage, i.e., equal to the output voltage of the direct-current power source or the voltage that is outputted by the power transformer through processing the voltage outputted by the primary-side power module. In this case, the first switching transistor Q1 is turned on, the second switching transistor Q2 is turned off. The second capacitor C2 is charged via the first switching transistor Q1 and the fourth resistor R1, and the first capacitor C1 is discharged.

In practice, the comparator U1 compares the voltage at the non-inverting terminal and the voltage at the inverting input terminal in real time. When the voltage at the non-inverting input terminal of comparator U1 is greater than that at the inverting input terminal, the voltage across the first capacitor C1 is greater than that across the second capacitor C2. In this case, the comparator U1 outputs the high level, and the voltage across the third resistor R3 is pulled up to the input voltage PV+. Thus, the first switching transistor Q1 is thus turned, and the second switching transistor Q2 is turned off. The input voltage charges the second capacitor C2 via the first switching transistor Q1 and the fourth resistor R4, thereby increasing the voltage across the second capacitor C2. Meanwhile, the first capacitor C1, the first switching transistor Q1, and the fourth resistor R4 form a discharge circuit to reduce the voltage across the first capacitor C1. Hence, the voltage across the first capacitor C1 and the voltage across the second capacitor C2 are balanced.

When the voltage across the first capacitor C1 and the voltage across the second capacitor C2 are balanced, the voltage across the first resistor R1 and the voltage across the second resistor R2 are equal, and the voltage at the non-inverting input terminal of the comparator U1 is equal to 0.5 × VIN.

When the voltage at the non-inverting input terminal of the comparator U1 is less than the voltage at the inverting input terminal, the comparator U1 outputs a low level. In this case, the first switching transistor Q1 is turned off and the second switching transistor Q2 is turned on. The first capacitor C1 is charged via the second switching transistor Q2 and the fourth resistor R4, and the second capacitor C2 is discharged.

In practice, the comparator U1 compares the voltage at the non-inverting input terminal and the voltage at the inverting input terminal in real time. When the voltage at the non-inverting input terminal of the comparator U1 is less than that at the inverting input terminal, the voltage across the first capacitor C1 is less than that across the second capacitor C2. Thus, the comparator U1 outputs the low level, the first switching transistor Q1 is turned off, and the second switching transistor Q2 is turned on. In this case, the output voltage PV-of the direct-current power source charges the first capacitor C1 via the fourth resistor R4 and the second switching transistor Q2, thereby increasing the voltage across the first capacitor C1. Meanwhile, the second capacitor C2, the second switching transistor Q2, and the fourth resistor R4 form a discharge circuit to reduce the voltage across the second capacitor C2. Hence, the voltage across the first capacitor C1 and the voltage across the second capacitor C2 are balanced.

When the voltage at the non-inverting input terminal of the comparator U1 is equal to the voltage at the inverting input terminal, the charging or discharging on the first capacitor C1 and/or the second capacitor C2 are stopped. In this case, the voltage across the first capacitor C1 and the voltage across the second capacitor C2 are balanced.

On a basis of the voltage balancing circuits in the foregoing embodiments, the voltage regulating circuit 401 operates as follows. When the first switch S1 is off, the first regulated voltage is outputted to the primary-side non-isolated step-down circuit 402 from the second capacitor C2. In other words, the primary-side non-isolated step-down circuit 402 draws power from the two terminals of the second capacitor C2. Therefore, the comparator U1 in the voltage balancing circuit is mainly in a state that the voltage at the non-inverting input terminal is greater than that at the inverting input terminal.

Given the voltage fluctuations across the first capacitor C1 and the second capacitor C2, a hysteresis circuit may be added to the comparator U1 as an improvement, so that the voltage balancing circuit only starts to operate when a difference between the two voltages is greater than a preset voltage.

The preset voltage may be set by technicians based on experiments or experience, which is not limited herein.

Hence, it is not necessary to use additional isolated power supplies. The input of the first auxiliary power supply and the input of the second auxiliary power supply are stepped down through the first voltage regulating circuit and the second voltage regulating circuit, respectively. Hence, the voltage fluctuations are suppressed. The stepped-down voltages are further stepped down by the primary-side non-isolated step-down circuit and the secondary-side non-isolated step-down circuit. Afterwards, the reduced voltages are supplied to the loads in the primary-side power module and the secondary-side power module. Stability of the micro inverter is improved, costs and complexity of supplying power to the micro inverter are reduced, and manufacturing costs of the micro inverter are reduced. The power supply occupies less space and is less complex.

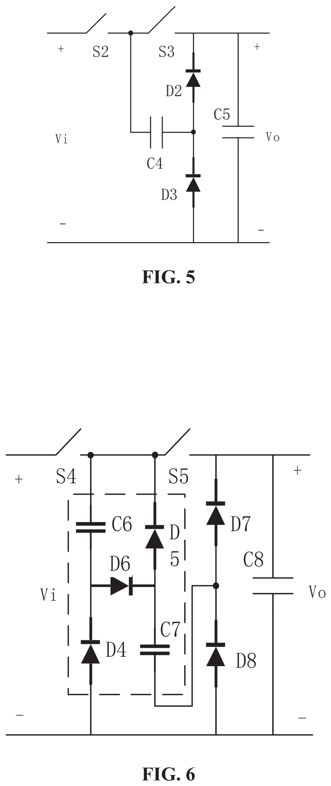

On a basis of the micro inverters in the foregoing embodiments, reference is made to FIG. 5, which shows another structure of the voltage regulating circuit 401 according to an embodiment of the present disclosure.

The voltage regulating circuit 401 comprises a second switch S2, a third switch S3, a fourth capacitor C4, a fifth capacitor C5, a second diode D2, and a third diode D3.

The second switch S2 is connected in series with the third switch S3. The second diode D2 is connected in series with the third diode D3. The fifth capacitor C5 is connected in parallel with a branching comprising the second diode D2 and the third diode D3. The third switch S3 is connected to a terminal of the branching comprising the second diode D2 and the third diode D3 that are connected in series. A terminal of the fourth capacitor C4 is connected to a common node between the second switch S2 and the third switch S3, and another terminal of the fourth capacitor C4 is connected between a common node between the second diode D2 and the third diode D3.

In an embodiment, a first output terminal of the power transformer 20 or a first output terminal of the direct-current power source 100 is connected to a terminal of the second switch S2, and another terminal of the second switch S2 is connected to a terminal of the third switch S3.

The common node between the second switch S2 and the third switch S3 is connected to a terminal of the fourth capacitor C4. Another terminal of the third switch S3 is connected to a cathode of the second diode D2, the anode of the second diode D2 is connected to a cathode of the third diode D3, and the anode of the third diode D3 is connected to a second output terminal of the power transformer 20 or a second output terminal of the direct-current power source 100. The common node between the second diode D2 and the third diode D3 is connected to another terminal of the fourth capacitor C4. The branch comprising of the second diode D2 and the third diode D3 is connected in parallel with the fifth capacitor C5, that is, the cathode of the second diode D2 is connected to a terminal of the fifth capacitor C5, and the anode of the third diode D3 is connected to another terminal of the fifth capacitor C5.

The two terminals of the fifth capacitor C5 are connected to the primary-side non-isolated step-down circuit 402 or the secondary-side non-isolated step-down circuit 502.

In an embodiment, the output voltage of the direct-current power source is converted into the first regulated voltage and the first regulated voltage is outputted to the primary-side non-isolated step-down circuit 401, which comprises the following processes.

When the second switch S2 is turned on and the third switch S3 is turned off, the fourth capacitor C4 and the fifth capacitor are charged by the output voltage of the direct-current power source.

When the second switch S2 is turned off and the third switch S3 is turned on, the fourth capacitor C4 or the fifth capacitor C5 are discharged. The discharging voltage serves as the first regulated voltage outputted to the primary-side non-isolated step-down circuit 402.

In practice, the voltage regulating circuit 401 functions as a buck circuit of a switch-capacitor type. When the second switch S2 is turned on and the third switch S3 is turned off, the fourth capacitor C4 and the fifth capacitor C5 are connected in series, and the output voltage of the direct-current power source charges both the fourth capacitor C4 and the fifth capacitor C5 while supplying power to the primary-side non-isolated step-down circuit 402. When the second switch S2 is turned off and the third switch S3 is turned on, the fourth capacitor C4 and the fifth capacitor C5 are connected in parallel, and either the fourth capacitor C4 or the fifth capacitor C5 supplies power to the primary-side non-isolated step-down circuit 402. That is, the voltage of the fourth capacitor C4 or the voltage of the fifth capacitor C5 serves as the first regulated voltage, and the first regulated voltage is sent to the primary-side non-isolated step-down circuit 402.

In an embodiment, the second voltage is converted into the second regulated voltage, and the second regulated voltage is outputted to the secondary-side non-isolated step-down circuit, which comprises the following processes.

When the second switch S2 is turned on and the third switch S3 is turned off, the fourth capacitor C4 and the fifth capacitor C5 that are connected in series are charged by the second voltage.

When the second switch S2 is turned off and the third switch S3 is turned on, the fourth capacitor C4 or the fifth capacitor C5 are connected in parallel and discharged. The discharging voltage serves as the second regulated voltage outputted to the secondary-side non-isolated step-down circuit 502.

As for the second voltage regulating circuit 401, a step-down process performed on the voltage outputted by the power transformer 20 is the same as the foregoing step-down process performed on the output voltage of the direct-current power source. The two processes may refer to each other, which is not limited herein.

When the fourth capacitor C4 or the fifth capacitor C5 are discharged in parallel, the second regulated voltage Vo or the first regulated voltage that is outputted is equal to a half of the input voltage, i.e.,Vi/2.

In an embodiment, duration of turning on or off of the second switch S2 and the third switch S3 is determined according to a preset duty cycle.

The preset duty cycle may be configured by technicians according to actual conditions.

Furthermore, the duty cycle refers to a percentage of duration during which the circuit is turned on in an entire operation cycle.

Hence, it is not necessary to use additional isolated power supplies. The input of the first auxiliary power supply and the input of the second auxiliary power supply are stepped down through the first voltage regulating circuit and the second voltage regulating circuit, respectively. Hence, the voltage fluctuations are suppressed. The stepped-down voltages are further stepped down by the primary-side non-isolated step-down circuit and the secondary-side non-isolated step-down circuit. Afterwards, the reduced voltages are supplied to the loads in the primary-side power module and the secondary-side power module. Stability of the micro inverter is improved, costs and complexity of supplying power to the micro inverter are reduced, and manufacturing costs of the micro inverter are reduced. The power supply occupies less space and is less complex.

Besides the second voltage regulating circuits as shown in FIG. 4 and FIG. 5, reference is made to FIG. 6, which shows a schematic diagram of another buck circuit according to an embodiment of the present disclosure. As shown in FIG. 6, the buck circuit 401 comprises a fourth switch S4, a fifth switch S5, a sixth capacitor C6, a seventh capacitor C7, an eighth capacitor C8, a fourth diode D4, a fifth diode D5, a sixth diode D6, a seventh diode D7, and an eighth diode D8.

The fourth switch S4 is connected in series with the fifth switch S5. The sixth capacitor S5 is connected in series with the fourth diode D4. The fifth diode D5 is connected in series with the seventh capacitor C7. The seventh diode D7 is connected in series with the eighth diode D8.

A branch comprising the sixth capacitor C6 and the fourth diode D4 is connected in parallel with a branch comprising the seventh diode D7 and the eighth diode D8. The branch comprising the seventh diode D7 and the eighth diode D8 is connected in parallel with the eighth capacitor C8.

The sixth capacitor C6 and the fifth diode D5 are connected to a common node between the fourth switch S4 and the fifth switch S5. The seventh capacitor C7 is connected to a common node of the seventh diode D7 and the eighth diode D8.

A terminal of the branch comprising the fourth switch S4 and the fifth switch S5 that are connected in series is connected to the seventh diode D7. A terminal of the sixth diode D6 is connected to a common node between the sixth capacitor C6 and the fourth diode D4, and another terminal of the sixth diode D6 is connected to a common node between the fifth diode D5 and the seventh capacitor C7.

In practice, a first output terminal of the power transformer 20 or a first output terminal of the direct-current power source 100 is connected to a terminal of the fourth switch S4. A terminal of the fourth switch S4 is connected to a terminal of the sixth capacitor C6 and the fifth switch S5, another terminal of the sixth capacitor C6 is connected to a cathode of the fourth diode D4, a common node between the sixth capacitor C6 and the fourth switch S4 is connected to a cathode of the fifth diode D5 and to a terminal of the fifth switch S5, a second output terminal of the power transformer 20 or a second output terminal of the direct-current power source 100 is connected to an anode of the fourth diode D4 and an anode of the eighth diode D8.

A terminal of the seventh capacitor C7 is connected to an anode of the fifth diode D5, another terminal of the seventh capacitor C7 is connected to the common node between the seventh diode D7 and the eighth diode D8. The common node between the sixth capacitor C6 and the fourth diode D4 is connected to an anode of the sixth diode D6, and a common node between the seventh capacitor C7 and the fifth diode D5 is connected to a cathode of the sixth diode D6.

A cathode of the seventh diode D7 is connected to another terminal of the fifth switch S5, an anode of the seventh diode D7 is connected to a cathode of the eighth diode D8, and the branch comprising the seventh diode D7 and the eighth diode D8 is connected in parallel with the eighth capacitor C8.

In an embodiment, the output voltage of the direct-current power source is converted into the first regulated voltage and the first regulated voltage is outputted to the primary-side non-isolated step-down circuit, which comprises the following processes.

When the fourth switch S4 is turned on and the fifth switch S5 is turned off, a voltage is applied across the sixth capacitor C6 and the seventh capacitor C7, and the sixth capacitor C6, the seventh capacitor C7, and the eighth capacitor C8 are charged by the output voltage of the direct-current power source.

When the fourth switch S4 is turned off and the fifth switch S5 is turned on, a voltage across the sixth capacitor C6, the seventh capacitor C7, and the eighth capacitor C8 that are charged serves as the first regulated voltage outputted to the primary-side non-isolated step-down circuit 402.

In practice, the voltage regulating circuit 402 functions as a buck circuit of a switch-capacitor type. When the fourth switch S4 is turned on and the fifth switch S5 is turned off, the fourth diode D4, the sixth diode D6, and the eighth diode D8 are reversely biased, and the fifth diode D5 and the seventh diode D7 are forwardly biased. In this case, the sixth capacitor C6, the seventh capacitor C7, and the eighth capacitor C8 are connected in series and are charged by the second voltage.

In this case, a current path passes the fourth switch S1, the sixth capacitor C6, the fifth diode D5, the seventh capacitor C7, the seventh diode D7, and finally reaches the eighth capacitor C8.

In an embodiment, the duration of turning on or turning off the fourth switch S4 and the fifth switch S5 is determined according to a preset duty cycle.

In an embodiment, when the duty cycle of the fourth switch S4 and the fifth switch S5 is kept at 0.5, the input voltage may be equal to a third of the first regulated voltage Vi. The series-parallel connection among the switches and capacitors further reduces the amplitude of the output voltage. Compared with conventional switch power supplies, the advantage of applying the switch-capacitor circuit is as follows. Using the same duty cycle, the output voltage can be reduced to the most extent, which greatly expands a range of the output voltage of the original power supply or a range of the voltage input into the power source. Hence, the whole scheme is better adapted to the fluctuations in the input voltage.

The series-parallel connection among the switches and capacitors may refer to the circuit comprising the sixth capacitor C6, the seventh capacitor C7, the fourth diode D4, the fifth diode D5, and the sixth diode D6, as shown in FIG. 6.

When the fourth switch S4 is turned off and the fifth switch S5 is turned on, the discharging voltage of the sixth capacitor C6, the seventh capacitor C7, or the eighth capacitor C8 serves as the first regulated voltage output to the primary-side non-isolated step-down circuit 402.

In practice, when the fourth switch S4 is turned off and the fifth switch S5 is turned on, the sixth capacitor C6, the seventh capacitor C7, and the eighth capacitor C8 are connected in parallel and are discharged. That is, the voltage across the sixth capacitor C6, the seventh capacitor C7, or the eighth capacitor C8 serves as the first regulated voltage in the discharging. The first regulated voltage is outputted to the primary-side non-isolated step-down circuit 402.

A discharge path of the sixth capacitor C6 passes through the sixth capacitor C6, the fifth switch S5, the second auxiliary power supply 50, and the fourth diode D4. A discharge path of the seventh capacitor C7 passes through the seventh capacitor C7, the fifth diode D5, the fifth switch S5, the second auxiliary power supply 50, and the eighth diode D8.

When the sixth capacitor C6, the seventh capacitor C7, and the eighth capacitor C8 are connected in parallel and are discharged, the outputted second regulated voltage Vo may be equal to a third of the second voltage Vi.

The second voltage is converted into the second regulated voltage, and the second regulated voltage is outputted to the secondary-side non-isolated step-down circuit 50, which comprises the following processes.

When the fourth switch S4 is turned on and the fifth switch S5 is turned off, a voltage is applied across the sixth capacitor C6 and the seventh capacitor C7. In such case, the sixth capacitor C6, the seventh capacitor C7, and the eighth capacitor C8 are connected in series and are charged by the second voltage.

Generally, when the second voltage regulating circuit 501 receives the second voltage, which is outputted by the power transformer 20 through transforming an output of the primary-side power module 10, the second voltage regulating circuit 501 is considered to be in a "conduction" state.

As for the above voltage regulating circuit 401, a step-down process performed on the voltage outputted by the power transformer 20 is the same as the foregoing step-down process performed on the output voltage of the direct-current power source. The two processes may refer to each other, which is not limited herein.

Hence, it is not necessary to use additional isolated power supplies. The input of the first auxiliary power supply and the input of the second auxiliary power supply are stepped down through the first voltage regulating circuit and the second voltage regulating circuit, respectively. Hence, the voltage fluctuations are suppressed. The stepped-down voltages are further stepped down by the primary-side non-isolated step-down circuit and the secondary-side non-isolated step-down circuit. Afterwards, the reduced voltages are supplied to the loads in the primary-side power module and the secondary-side power module. Stability of the micro inverter is improved, costs and complexity of supplying power to the micro inverter are reduced, and manufacturing costs of the micro inverter are reduced. The power supply occupies less space and is less complex.

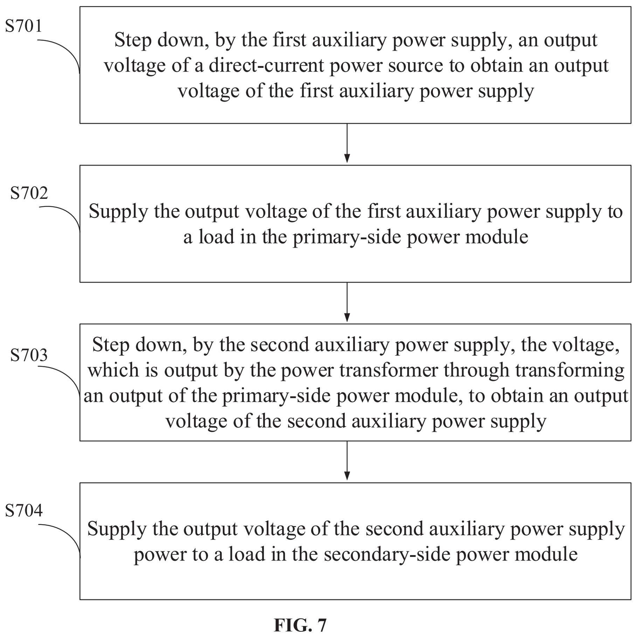

On a basis of the micro inverters in the above embodiments, a method for supplying power is further provided according to embodiments of the present disclosure. Reference is made to FIG. 7, which shows a flowchart of a method for supplying power. The method is applicable to the micro inverter in the above embodiments and comprises steps S701 to S704.

In step S701, the first auxiliary power supply steps down an output voltage of a direct-current power source to obtain an output voltage of the first auxiliary power supply.

In step S702, the output voltage of the first auxiliary power supply is supplied to a load in the primary-side power module.

In step S703, the second auxiliary power supply steps down the voltage, which is output by the power transformer through transforming an output of the primary-side power module, to obtain an output voltage of the second auxiliary power supply.

In step S704, the output voltage of the second auxiliary power supply power is supplied to a load in the secondary-side power module.

The first auxiliary power supply and the second auxiliary power supply are both non-isolated power supplies.

In an embodiment, the method for supplying power further comprises the following steps. The second auxiliary power supply steps down a voltage outputted by the power grid to obtain another output voltage of the second auxiliary power supply. The other output voltage of the second auxiliary power supply power is supplied to a load in the secondary-side power module.

Herein specific principles and execution processes of the respective steps of the method for supplying power are the same as those of the operation of the micro inverters in the foregoing embodiments. Details may refer to the corresponding parts in the micro-inverter embodiments and thus will not be repeated here.

Hence, it is not necessary to use additional isolated power supplies. The voltage of the power supply is stepped down through the first voltage regulating circuit and the second voltage regulating circuit. Hence, the voltage fluctuations are suppressed. The stepped-down voltages are supplied to the loads in the primary-side power module and the secondary-side power module. Stability of the micro inverter is improved, costs and complexity of supplying power to the micro inverter are reduced, and manufacturing costs of the micro inverter are reduced. The power supply occupies less space and is less complex.

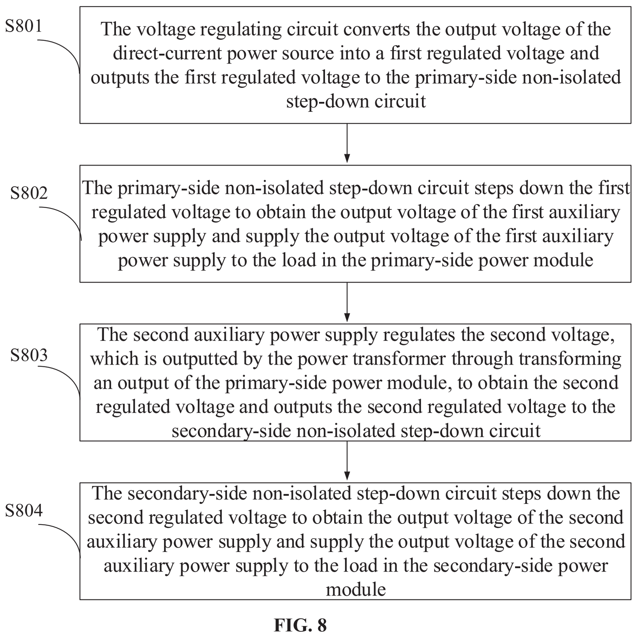

On a basis of the method as shown in FIG. 7, reference is made to FIG. 8, which shows a flowchart of another method for supplying power according to an embodiment of the present disclosure. As shown in FIG. 8, the method includes steps S801 to S804.

In step S801, the voltage regulating circuit converts the output voltage of the direct-current power source into a first regulated voltage and outputs the first regulated voltage to the primary-side non-isolated step-down circuit.

The step S801 may be implemented in various manners.

In a first manner, step S801 comprise operations S11 to S17.

In operation S11, it is determined whether the output voltage VIN of the direct-current power source is greater than a first threshold VINmin and less than a second threshold VINmid. In case of positive determination, the process proceeds to operation S12. In case of negative determination, the process proceeds to operation S13.

In operation S12, the first switch is turned on to bias first diode reversely and charge the third capacitor using the output voltage VIN of the direct-current power source. The first regulated voltage is outputted from the third capacitor to the primary-side non-isolated operation-down circuit.

In practice, the first switch is turned on, and the first diode is reversely biased. In this case, the third capacitor is connected in parallel with the branch comprising the first capacitor and the second capacitor. The third capacitor is charged by the voltage across the first capacitor and the second capacitor. In other words, the first regulated voltage VIN' across the third capacitor is equal to the output voltage VIN of the direct-current power source. Discharging the third capacitor generates the first regulated voltage VIN' to the primary-side non-isolated operation-down circuit.

In operation S13, it is determined whether the output voltage VIN of the direct-current power source is greater than the second threshold VINmid and less than a third threshold VINmax. In case of positive determination, the process proceeds to operations S14 and S15. In case of negative determination, the process proceeds to operation S16.

In operation S14, the first switch is turned off to bias the first diode D1 forwardly and charge the first capacitor C1 and the second capacitor C2 using the output voltage VIN of the direct-current power source.

In operation S15, the voltage of the third capacitor serves as the first regulated voltage outputted to the primary-side non-isolated operation-down circuit. The voltage across the third capacitor C3 depends on the voltage across the first capacitor and the voltage across the second capacitor.

In operation S14 and operation S15, the first switch S1 is turned off, and the first diode D1 is forwardly biased. The third capacitor C3 is connected in parallel with the second capacitor C2, and the third capacitor C3 is charged by the voltage across the second capacitor C2. In this case, the first regulated voltage VIN' across the third capacitor C3 is equal to a half of the output voltage VIN of the direct-current power source. Discharging the third capacitor generates the first regulated voltage VIN' outputted to the primary-side non-isolated operation-down circuit.

In operation S16, it is determined whether the output voltage VIN of the direct-current power source is greater than the third threshold VINmax. In case of positive determination, the process proceeds to operation S17. In case of negative determination, the voltage across the first capacitor C1 and the voltage across the second capacitor C2 are adjusted to balance these two voltages. In this case, the output voltage VIN of the direct-current power source is adjusted.

In operation S17, the direct-current power source is controlled to stop supplying power, and an alarm message may be issued for maintenance personnel to check.

In practice, the process proceeding to operation S17 indicates that the output voltage signal VIN of the direct-current power source is subject to abnormal fluctuations. In such case, the direct-current power source is controlled to stop supplying power, and the alarm message i may be issued for maintenance personnel to check.

The output voltage VIN of the direct-current power source is desired to range from the first threshold VINmin to the third threshold VINmax, where VINmin is smaller than VIN' (otherwise the primary-side non-isolated operation-down circuit would not operate). The second threshold VINmid is set to be the threshold voltage for turning off the switch S1. The first threshold VINmin is less than the second threshold VINmid, the second threshold VINmid is less than the third threshold VINmax, and the second threshold VINmid is greater than or equal to twice of the first threshold VINmin.

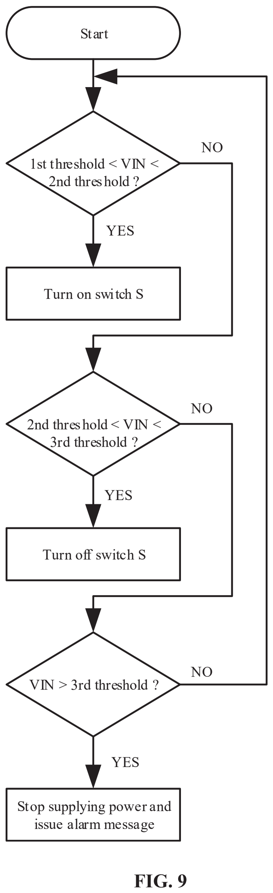

In an embodiment, operations S11 to S17 may be implemented as shown in FIG. 9.

In an embodiment, before operation S11 is executed, the process further comprises a following operation. The voltage across the first capacitor and the voltage across the second capacitor are balanced.

In an embodiment, a process of balancing the voltage across the first capacitor and the voltage across the second capacitor comprises operations S21 to S27.

In operation S21, the comparator compares, in real time, the voltage at the non-inverting input terminal with the voltage at the inverting input terminal. In a case that the voltage at the non-inverting input terminal is greater than that at the inverting input terminal, the process proceeds to operations S22 to S24. In a case that the voltage at the non-inverting input terminal is less than that at the inverting input terminal, he process proceeds to operations S25 to S26. In a case that the voltage at the non-inverting input terminal is equal to that at the inverting input terminal, the process proceeds to operation S27.

In operation S22, the comparator outputs the high level to turn on the first switching transistor and turn off the second switching transistor.

In operation S23, the second capacitor is charged via the first switching transistor and the fourth resistor using the voltage outputted by the direct-current power source, and the first capacitor is discharged.

In operation S22 and operation S23, the comparator outputs the high level, and the voltage across the third resistor is pulled up to the output voltage of the direct-current power source. The first switching transistor is turned on, and the second switching transistor is turned off. In this case, the output voltage of the direct-current power source charges the second capacitor via the first switching transistor and the fourth resistor, thereby increasing the voltage across the second capacitor. Meanwhile, the first capacitor, the first switching transistor, and the fourth resistor form a discharge circuit to reduce the voltage across the first capacitor. Thereby, voltage balancing is achieved between the first capacitor and the second capacitor.

When the voltage across the first capacitor and the voltage across the second capacitor are balanced, the voltage across the first resistor and the voltage across the second resistor are equal, and the voltage at the non-inverting input terminal of the comparator is equal to 0.5 × VIN.

In operation S25, the comparator outputs the low level is outputted to turn off the first switching transistor and turn on the second switching transistor.

In operation S26, the first capacitor is charged via the second switching transistor and the fourth resistor by the voltage outputted by the direct-current power source, and the second capacitor is discharged.

In operation S25 and operation S26, the comparator outputs the low level. The first switching transistor is turned off, and the second switching transistor is turned on. In this case, the output voltage of the direct-current power source charges the first capacitor via the fourth resistor and the second switching transistor, thereby increasing the voltage across the first capacitor. Meanwhile, the second capacitor, the second switching transistor, and the fourth resistor form a discharge circuit to reduce the voltage across the second capacitor. Thereby, voltage balancing is achieved between the first capacitor and the second capacitor.

In operation S27, charge/discharge of the first capacitor and/or the second capacitor is stopped.

The second manner is illustrated as follows.

The voltage regulating circuit converting the output voltage of the direct-current power source into the first regulated voltage and outputting the first regulated voltage to the primary-side non-isolated step-down circuit comprises following steps.

When the second switch is turned on and the third switch is turned off, the fourth capacitor and the fifth capacitor are charged using the output voltage of the direct-current power source.

When the second switch is turned off and the third switch is turned on, the fourth capacitor or the fifth capacitor are discharged, where the discharging voltage serves as the first regulated voltage outputted to the primary-side non-isolated step-down circuit.

In step S802, the primary-side non-isolated step-down circuit steps down the first regulated voltage to obtain the output voltage of the first auxiliary power supply, and the output voltage of the first auxiliary power supply is supplied to the load in the primary-side power module.

In practice, the primary-side non-isolated step-down circuit steps down the first regulated voltage directly to be the output voltage of the first auxiliary power supply, and the output voltage of the first auxiliary power supply is supplied to the load in the primary-side power module.

The output voltage of the first auxiliary power supply may be 3.3V, 5V, 12V, or the like.

In step S803, the second auxiliary power supply regulates the second voltage, which is outputted by the power transformer through transforming an output of the primary-side power module, to obtain the second regulated voltage, and outputs the second regulated voltage to the secondary-side non-isolated step-down circuit.

It should be noted that various embodiments are applicable for the process of regulating the second voltage to obtain the second regulated voltage and outputs the second regulated voltage to the secondary-side non-isolated step-down circuit.

In a first embodiment, this step comprises following operations.

When the voltage, which is outputted by the power transformer through transforming the output of the primary-side power module, is greater than the first threshold and less than the second threshold, the first switch is turned on to bias the first diode reversely and charge the third capacitor using the voltage outputted by the power transformer. The third capacitor outputs the second regulated voltage to the secondary-side non-isolated step-down circuit.

When the voltage outputted by the power transformer is greater than the second threshold and less than a third threshold, the first switch is turned off to bias the first diode forwardly and charge the second capacitor using the voltage outputted by the power transformer. The voltage across the third capacitor depends on the voltage across the second capacitor and serves as the second regulated voltage outputted to the secondary-side non-isolated step-down circuit.

Specific implementation of the first embodiment is identical to as the specific implementation process of steps S11 to S17 described above, and mutual reference may be made between the two.

In a second embodiment, step S803 comprises operations S31 to S32.

In operation S31, when the second switch is turned on and the third switch is turned off, the fourth capacitor and the fifth capacitor that are connected in series are charged using the above-defined second voltage.

In operation S32, when the second switch is turned off n and the third switch is turned on, the fourth capacitor and the fifth capacitor are discharged, and the discharging voltage serves as the second regulated voltage outputted to the secondary-side non-isolated step-down circuit.

In a third embodiment, step S803 comprises operations S41 to S42.

In step S41, when the fourth switch is turned on and the fifth switch is turned off, a charging pass is established via the sixth capacitor and the seventh capacitor, and the sixth capacitor, the seventh capacitor, and the eighth capacitor are charged using the above-defined second voltage.

In step S42, when the fourth switch is turned off and the fifth switch is turned on, the discharged voltage of the sixth capacitor, the seventh capacitor, or the eighth capacitor serves as the second regulated voltage outputted to the secondary-side non-isolated step-down circuit.

In step S804, the secondary-side non-isolated step-down circuit steps down the second regulated voltage to obtain the output voltage of the second auxiliary power supply, and the output voltage of the second auxiliary power supply is supplied to the load in the secondary-side power module.

In practice, the secondary-side non-isolated step-down circuit steps down the second regulated voltage directly to be the output voltage of the second auxiliary power supply, and the output voltage of the second auxiliary power supply is supplied to the load in the secondary-side power module.

Hence, it is not necessary to use additional isolated power supplies. The voltage of the power supply is stepped down through the first voltage regulating circuit and the second voltage regulating circuit. Hence, the voltage fluctuations are suppressed. The stepped-down voltages are supplied to the loads in the primary-side power module and the secondary-side power module. Stability of the micro inverter is improved, costs and complexity of supplying power to the micro inverter are reduced, and manufacturing costs of the micro inverter are reduced. The power supply occupies less space and is less complex.

The embodiments are described in this specification in a progressive manner. Various embodiments may refer to each other for the same or similar parts, and each embodiment places emphasis on the difference from other embodiments. In particular, the system or system embodiment is substantially similar to the method embodiment and therefore is briefly described. For relevant details, reference can be made to the corresponding description of the method embodiment. The system and system embodiments described above are only illustrative, in which the units described as separate components may or may not be physically separated, and the components shown as units may or may not be physical units, that is, they may be arranged in one place or distributed over multiple network elements. Some or all the modules may be selected as needed to achieve the objective of the solution of the embodiments, while those skilled in the art can understand and implement such solution without any creative effort.

Those skilled in the art may further realize that the units and algorithm steps in each of the examples described in conjunction with the embodiments disclosed herein can be implemented by electronic hardware, computer software, or a combination of the both. In order to clearly illustrate the interchangeability of hardware and software, the modules and steps of each of the examples have been described in general terms of functionality in the above description. Whether these functions are performed in hardware or software depends on the specific application and design constraints of the technical solution. Those skilled in the art may implement the described functionality in various manners for each specific application, and such implementations fall within the scope of the present disclosure.

According to the above description of the disclosed embodiments, those skilled in the art can implement or practice the present disclosure. Various modifications to these embodiments may be obvious to those skilled in the art, and the general principles defined herein may be implemented in other embodiments without departing from the spirit and scope of the present disclosure. Therefore, the present disclosure is not to be limited to the embodiments shown herein but should be conformed to the widest scope consistent with the principles and novel features disclosed herein.

## Claims

1. A micro inverter, comprising:
a primary-side power module, a power transformer, a secondary-side power module, a first auxiliary power supply, and a second auxiliary power supply, wherein:
the first auxiliary power supply is connected to a direct-current power source and the primary-side power module;
the first auxiliary power supply is configured for:
stepping down an output voltage of the direct-current power source to obtain an output voltage of the first auxiliary power supply; and
supplying the output voltage of the first auxiliary power supply to a load in the primary-side power module;
the primary-side power module is connected to the power transformer, the power transformer is connected to the second auxiliary power supply, and the second auxiliary power supply is connected to the secondary-side power module;
the second auxiliary power supply is configured for:
stepping down the voltage, which is outputted by the power transformer through transforming an output of the primary-side power module, to obtain an output voltage of the second auxiliary power supply; and
supplying the output voltage of the second auxiliary power supply power to a load in the secondary-side power module.

2. The micro inverter according to claim 1, wherein:
the first auxiliary power supply and the second auxiliary power supply are both non-isolated power supplies.

3. The micro inverter according to claim 1, wherein:
the second auxiliary power supply is connected to a power grid;
the second auxiliary power supply is further configured for:
stepping down a voltage, which is outputted by the power grid, to obtain another output voltage of the second auxiliary power supply; and
supplying the another output voltage of the second auxiliary power supply to the load in the secondary-side power module.

4. The micro inverter according to claim 1, wherein:
the first auxiliary power supply comprises a voltage regulating circuit and a primary-side non-isolated step-down circuit, and the voltage regulating circuit is connected to the primary-side non-isolated step-down circuit;
the voltage regulating circuit is configured for:
converting the output voltage of the direct-current power source into a first regulated voltage; and
outputting the first regulated voltage to the primary-side non-isolated step-down circuit; and
the primary-side non-isolated step-down circuit is configured for:
stepping down the first regulated voltage to obtain the output voltage of the first auxiliary power supply; and
supplying the output voltage of the first auxiliary power supply to the load in the primary-side power module.

5. The micro inverter according to claim 1, wherein:
the second auxiliary power supply comprises a voltage regulating circuit and a secondary-side non-isolated step-down circuit, and the voltage regulating circuit is connected to the secondary-side non-isolated step-down circuit;
the voltage regulating circuit is configured for:
converting the voltage, which is outputted by the power transformer through transforming an output of the primary-side power module, into a second regulated voltage; and
outputting the second regulated voltage to the secondary-side non-isolated step-down circuit; and
the secondary-side non-isolated step-down circuit is configured for:
stepping down the second regulated voltage to obtain the output voltage of the second auxiliary power supply; and
supplying the output voltage of the second auxiliary power supply to the load in the secondary-side power module.

6. The micro inverter according to claim 4 or 5, wherein:
the voltage regulating circuit comprises a first capacitor, a second capacitor, a third capacitor, a first diode, and a first switch;
the first capacitor and the second capacitor are connected in series, and the third capacitor is connected to the first switch;
a branch comprising the first capacitor and the second capacitor is connected in parallel with the third capacitor; and
a terminal of the first diode is connected to a common node between the first capacitor and the second capacitor, and another terminal of the first diode is connected to a common node between the third capacitor and the first switch.

7. The micro inverter according to claim 6, wherein:
the voltage regulating circuit further comprises a voltage balancing circuit;
the voltage balancing circuit is connected to the first capacitor and the second capacitor; and
the voltage balancing circuit is configured for balancing a voltage across the first capacitor and a voltage across the second capacitor.

8. The micro inverter according to claim 7, wherein:
the voltage balancing circuit comprises a first resistor, a second resistor, a third resistor, a fourth resistor, a first switching transistor, a second switching transistor, and a comparator;
the first resistor is connected in series with the second resistor, and a common node between the first resistor and the second resistor is connected to a non-inverting input terminal of the comparator;
a branch comprising of the first resistor and the second resistor is connected in parallel with the third resistor, and the third resistor is connected in parallel with a branch comprising the first switching transistor and the second switching transistor;
a terminal of the third resistor is connected to a gate of the first switching transistor, a gate of the second switching transistor, and an output terminal of the comparator;
the branch comprising the first switching transistor and the second switching transistor is connected in parallel with a branch comprising the first capacitor and the second capacitor; and
a terminal of the fourth resistor is connected to a common node between the first switching transistor and the second switching transistor, and another terminal of the fourth resistor and an inverting input terminal of the comparator are connected to a common node between the first capacitor and the second capacitor.

9. The micro inverter according to claim 4 or 5, wherein:
the voltage regulating circuit comprises a second switch, a third switch, a fourth capacitor, a fifth capacitor, a second diode, and a third diode;
the second switch is connected in series with the third switch, the second diode is connected in series with the third diode, and the fifth capacitor is connected in parallel with a branch comprising the second diode and the third diode;
the third switch is connected to a terminal of the branch comprising the second diode and the third diode; and
a terminal of the fourth capacitor is connected to a common node between the second switch and the third switch, and another terminal of the fourth capacitor is connected to a common node between the second diode and the third diode.

10. The micro inverter according to claim 4 or 5, wherein:
the voltage regulating circuit comprises a fourth switch, a fifth switch, a sixth capacitor, a seventh capacitor, an eighth capacitor, a fourth diode, a fifth diode, a sixth diode, a seventh diode, and an eighth diode;
the fourth switch is connected in series with the fifth switch, the sixth capacitor is connected in series with the fourth diode, the fifth diode is connected in series with the seventh capacitor, and he seventh diode is connected in series with the eighth diode;
a branch comprising the sixth capacitor and the fourth diode is connected in parallel with a branch comprising the seventh diode and the eighth diode, and the branch comprising the seventh diode and the eighth diode is connected in parallel with the eighth capacitor;
the sixth capacitor and the fifth diode are connected to a common node between the fourth switch and the fifth switch;
the seventh capacitor is connected to a common node between the seventh diode and the eighth diode;
a terminal of a branch comprising the fourth switch and the fifth switch is connected to the seventh diode;
a terminal of the sixth diode is connected to a common node between the sixth capacitor and the fourth diode, and another terminal of the sixth diode is connected to a common node between the fifth diode and the seventh capacitor.

11. A method for supplying power, applicable to the micro inverter according to any one of claims 1 to 10, wherein the micro inverter comprises a primary-side power module, a power transformer, a secondary-side power module, a first auxiliary power supply, and a second auxiliary power supply, and the method comprises:
stepping down, by the first auxiliary power supply, an output voltage of a direct-current power source to obtain an output voltage of the first auxiliary power supply;
supplying the output voltage of the first auxiliary power supply to a load in the primary-side power module;
stepping down, by the second auxiliary power, the voltage, which is outputted by the power transformer through transforming an output of the primary-side power module, to obtain an output voltage of the second auxiliary power supply; and
supplying the output voltage of the second auxiliary power supply power to a load in the secondary-side power module.

12. The method according to claim 11, wherein:
the first auxiliary power supply comprises a voltage regulating circuit and a primary-side non-isolated step-down circuit, and
stepping down, by the first auxiliary power supply, the output voltage of the direct-current power source to obtain the output voltage of the first auxiliary power supply comprises:
converting, by the voltage regulating circuit, the output voltage of the direct-current power source into a first regulated voltage;
outputting, by the voltage regulating circuit, the first regulated voltage to the primary-side non-isolated step-down circuit;
stepping down, by the primary-side non-isolated step-down circuit, the first regulated voltage to obtain the output voltage of the first auxiliary power supply; and
supplying the output voltage of the first auxiliary power supply to the load in the primary-side power module.

13. The method according to claim 11, wherein:
the second auxiliary power supply comprises a voltage regulating circuit and a secondary-side non-isolated step-down circuit; and
stepping down, by the second auxiliary power, the voltage, which is outputted by the power transformer through transforming the output of the primary-side power module, to obtain the output voltage of the second auxiliary power supply comprises:
converting, by the voltage regulating circuit, the voltage outputted by the power transformer into a second regulated voltage;
outputting, by the voltage regulating circuit, the second regulated voltage to the secondary-side non-isolated step-down circuit;
stepping down, by the secondary-side non-isolated step-down circuit, the second regulated voltage to obtain the output voltage of the second auxiliary power supply; and
supplies the output voltage of the second auxiliary power supply to the load in the secondary-side power module.

14. The method according to claim 12, wherein:
the voltage regulating circuit comprises a first capacitor, a second capacitor, a third capacitor, a first diode, and a first switch; and
converting the output voltage of the direct-current power source into the first regulated voltage and outputting the first regulated voltage to the primary-side non-isolated step-down circuit comprises:
in response to the output voltage of the direct-current power source being greater than a first threshold and less than a second threshold, turning on the first switch to bias the first diode reversely and charge the third capacitor with the output voltage of the direct-current power source, wherein the first regulated voltage is outputted from the third capacitor to the primary-side non-isolated step-down circuit; and
in response to the output voltage of the direct-current power source being greater than the second threshold and less than a third threshold, turning off the first switch to bias the first diode forwardly and charge the second capacitor using the output voltage of the direct-current power source, wherein a voltage across the third capacitor depends on a voltage across the second capacitor, and the first regulated voltage is outputted from the third capacitor to the primary-side non-isolated step-down circuit.

15. The method according to claim 13, wherein:
the voltage regulating circuit comprises a first capacitor, a second capacitor, a third capacitor, a first diode, and a first switch; and
converting the voltage outputted by the power transformer into the second regulated voltage and outputting the second regulated voltage to the secondary-side non-isolated step-down circuit comprises:
in response to the voltage outputted by the power transformer being greater than a first threshold and less than a second threshold, turning on the first switch to bias the first diode reversely and charge the third capacitor with the voltage outputted by the power transformer, wherein the second regulated voltage is outputted from the third capacitor to the primary-side non-isolated step-down circuit; and
in response to the voltage outputted by the power transformer being greater than the second threshold and less than a third threshold, turning off the first switch to bias the first diode forwardly and charge the second capacitor using the voltage outputted by the power transformer, wherein a voltage across the third capacitor depends on a voltage across the second capacitor, and the second regulated voltage is outputted from the third capacitor to the primary-side non-isolated step-down circuit.

16. The method according to claim 14 or 15, wherein:
the voltage regulating circuit further comprises a voltage balancing circuit, and the voltage balancing circuit comprises a first resistor, a second resistor, a third resistor, a fourth resistor, a first switching transistor, a second switching transistor, and a comparator; and
the method further comprises:
in response to a voltage at a non-inverting terminal of the comparator being greater than a voltage at an inverting terminal of the comparator, turning on the first switching transistor and turning off the second switching transistor, through a high level outputted by the comparator, to charge the second capacitor via the first switching transistor and the fourth resistor and discharge the first capacitor;
in response to the voltage at the non-inverting terminal being less than the voltage at the inverting terminal, turning off the first switching transistor and turning on the second switching transistor, through a low level outputted by the comparator, to charge the first capacitor via the second switching transistor and the fourth resistor and discharge the second capacitor; and
in response to the voltage at the non-inverting terminal being equal to the voltage at the inverting terminal, neither discharging or charging at least one of the first capacitor or the second capacitor.

17. The method according to claim 12, wherein:
the voltage regulating circuit comprises a second switch, a third switch, a fourth capacitor, a fifth capacitor, a second diode, and a third diode; and
converting the output voltage of the direct-current power source into the first regulated voltage and outputting the first regulated voltage to the primary-side non-isolated step-down circuit comprises:
in response to the second switch being on and the third switch being off, charging the fourth capacitor and the fifth capacitor using the output voltage of the direct-current power source; and
in response to the second switch being off and the third switch being on, discharging the fourth capacitor and the fifth capacitor, wherein a voltage across the fourth capacitor and the fifth capacitor serves as the first regulated voltage outputted to the primary-side non-isolated step-down circuit.

18. The method according to claim 13, wherein:
the voltage regulating circuit comprises a second switch, a third switch, a fourth capacitor, a fifth capacitor, a second diode, and a third diode; and
converting the voltage outputted by the power transformer into the second regulated voltage and outputting the second regulated voltage to the secondary-side non-isolated step-down circuit comprises:
in response to the second switch being on and the third switch being off, charging the fourth capacitor and the fifth capacitor using the output voltage of the direct-current power source; and
in response to the second switch being off and the third switch being on, discharging the fourth capacitor and the fifth capacitor, wherein a voltage across the fourth capacitor and the fifth capacitor serves as the second regulated voltage outputted to the secondary-side non-isolated step-down circuit.

19. The method according to claim 12, wherein:
the voltage regulating circuit comprises a fourth switch, a fifth switch, a sixth capacitor, a seventh capacitor, an eighth capacitor, a fourth diode, a fifth diode, a sixth diode, a seventh diode, and an eighth diode; and
converting the output voltage of the direct-current power source into the first regulated voltage and outputting the first regulated voltage to the primary-side non-isolated step-down circuit comprises:
in response to the fourth switch being on and the fifth switch being off, charging the sixth capacitor, the seventh capacitor and the eighth capacitor using the output voltage of the direct-current power source, wherein a voltage is applied on the sixth capacitor and the seventh capacitor; and
in response to the fourth switch being off and the fifth switch being on, outputting a voltage across the sixth capacitor, the seventh capacitor and the eighth capacitor, which have been charged, to the primary-side non-isolated step-down circuit as the first regulated voltage.

20. The method according to claim 13, wherein:
the voltage regulating circuit comprises a fourth switch, a fifth switch, a sixth capacitor, a seventh capacitor, an eighth capacitor, a fourth diode, a fifth diode, a sixth diode, a seventh diode, and an eighth diode; and
converting the voltage outputted by the power transformer into the second regulated voltage and outputting the second regulated voltage to the secondary-side non-isolated step-down circuit comprises:
in response to the fourth switch being on and the fifth switch being off, charging the sixth capacitor, the seventh capacitor and the eighth capacitor using the output voltage of the direct-current power source, wherein a voltage is applied on the sixth capacitor and the seventh capacitor; and
in response to the fourth switch being off and the fifth switch being on, outputting a voltage across the sixth capacitor, the seventh capacitor and the eighth capacitor, which have been charged, to the secondary-side non-isolated step-down circuit as the second regulated voltage.
